# EUROPÄISCHE PATENTSCHRIFT

(11) **EP 3 017 918 B1**
(45) Veröffentlichungstag und Bekanntmachung des Hinweises auf die Patenterteilung: **12.06.2024**
(21) Anmeldenummer: 15191202.9
(22) Anmeldetag: 23.10.2015
(51) Int. Cl.: B25J 9/16

(54) **FLEXIBLES TAKTZEITOPTIMIERTES TEILEN EINES ARBEITSRAUMS FÜR ROBOTER**
FLEXIBLE CYCLE TIME OPTIMIZED PARTS OF A WORK SPACE FOR ROBOT
PARTIES SOUPLES A CADENCE OPTIMISEE D'UN ESPACE DE TRAVAIL POUR ROBOT

(30) Priorität: 10.11.2014 DE 102014222857
(43) Veröffentlichungstag der Anmeldung: 11.05.2016
(73) Patentinhaber: KUKA Deutschland GmbH, 86165 Augsburg (DE)
(72) Erfinder: PFAFF, Bettina, 86152 Augsburg (DE); NEFF, Thomas, 86163 Augsburg (DE); HANSEN, Marcus, 61267 Neu-Anspach (DE); WOLF, Michael, 86165 Augsburg (DE); FREMUTH-PAEGER, Christian, 86165 Augsburg (DE); HEINRICH, Thomas, 86153 Augsburg (DE)
(74) Vertreter: Mader, Joachim

(56) Entgegenhaltungen:
- EP-A1- 2 586 574
- DE-A1-102006 055 359
- JP-A- 2009 178 835
- US-A- 4 644 237
- LEE B H ET AL: "Collision-Free Motion Planning of Two Robots", IEEE TRANSACTIONS ON SYSTEMS, MAN AND CYBERNETICS, IEEE INC. NEW YORK, US, vol. 16, no. 1, 1 January 1987 (1987-01-01), pages 21-32, XP011161561, ISSN: 0018-9472

## Beschreibung

### 1. Technischer Bereich

Die vorliegende Erfindung betrifft allgemein ein Verfahren zum Steuern eines Manipulators, der einen Arbeitsraum mit zumindest einem anderen Manipulator teilt, und insbesondere wobei der Arbeitsraum nicht gleichzeitig von den Manipulatoren verwendet wird.

### 2. Technischer Hintergrund

Manipulatoren, wie insbesondere Industrieroboter, werden für verschiedene Arbeitsprozesse in beispielsweise der Montage oder Fertigung im industriellen Umfeld eingesetzt. Industrieroboter sind automatisch gesteuerte, mit drei oder mehr frei programmierbaren Bewegungsachsen ausgerüstete Maschinen, die zur selbsttätigen Handhabung von Objekten mit zweckdienlichen Werkzeugen ausgerüstet sind.

Der Einsatz mehrerer Manipulatoren, wie etwa Roboter, die denselben Arbeitsraum (oder Arbeitsplatz, Arbeitsbereich) teilen, kann die Produktivität erhöhen. Allerdings sollte ein Arbeitsraum nicht von mehreren Manipulatoren gleichzeitig genutzt werden, da dies zu Kollisionen führen kann. Deshalb überprüft ein Manipulator, bzw. dessen Steuerung, üblicherweise, bevor er in einen definierten gemeinsamen Arbeitsraum einfährt, an der Grenze zu dem Arbeitsraum, ob der Arbeitsraum nicht belegt und somit freigegeben ist. Wenn der Arbeitsraum nicht freigegeben ist, bremst der Manipulator herkömmlicherweise direkt vor dem Erreichen der Arbeitsraumgrenze. Erst wenn eine Freigabe des Arbeitsraumes erteilt wird, beschleunigt der Manipulator wieder und fährt in den Arbeitsraum. Dieses Verfahren bringt einige Nachteile mit sich, insbesondere führt es zu unerwünschten Stillzeiten des Manipulators. Außerdem kostet das Abbremsen und Beschleunigen zusätzliche Energie und erhöht die Belastung auf den Manipulator.

In dem Dokument US 2009/0204258 A1 wird ein System und eine Methode beschrieben um eine Mehrzahl von Robotern auf einer Schiene zu steuern. Um Kollisionen der Roboter zu verhindern, wird vorgeschlagen, dynamische Räume der Roboter zu überwachen, und einen Roboter anzuhalten, wenn sich diese Räume überlagern.

Ferner wird in dem Dokument US 2013/0110288 A1 vorgeschlagen, den Arbeitsraum von jedem Roboter zu modellieren, und dabei ein oder mehrere Störungsbereiche zu definieren. Die Störungsbereiche sollen dabei entweder als "unzulässig", "überwacht" oder "hybrid" klassifiziert werden. Der Status eines hybriden Störungsbereichs wird für jeden Roboter dynamisch zwischen "unzulässig" und "überwacht" geändert, je nachdem, ob der hybride Bereich frei von anderen Robotern ist.

Das Patent US 7,765,031 B2 betrifft ein Verfahren zum Vermeiden einer Interferenz zwischen einer Vielzahl an Robotern in einem Überlappungsabschnitt zwischen Besetzungszonen einer Vielzahl von Robotern. Ferner wird in der Patentschrift ein Roboter beschrieben, der eine Interferenz mit einem anderen Roboter in einem Überlappungsabschnitt zwischen den Besetzungszonen des Roboters und des anderen Roboters vermeiden kann.

Somit ist aus dem Stand der Technik bekannt, Arbeitsraumverletzungen zu erkennen und gegebenenfalls die Bewegung eines Manipulators zu stoppen, um Kollisionen zu vermeiden.

Im Hinblick auf den oben erläuterten Stand der Technik ist es das Ziel der vorliegenden Erfindung, ein Verfahren und ein System bereitzustellen, welches ein besseres Nutzen eines Arbeitsraums durch mehrere Manipulatoren erlaubt, und dabei die oben genannten Nachteile ausräumt oder vermindert. Die Aufgabe wird mit dem Verfahren gemäß Anspruch 1 und dem Manipulatorsystem gemäß Anspruch 10 gelöst.

### 3. Inhalt der Erfindung

Das erfindungsgemäße Verfahren zum Steuern eines Manipulators, insbesondere eines Roboters wie etwa eines Industrieroboters, dient insbesondere dazu, ein effizientes Teilen eines Arbeitsraums mit mindestens einem zweiten Manipulator zu ermöglichen. Grundsätzlich kann das erfindungsgemäße Verfahren eingesetzt werden, wenn eine Vielzahl von Manipulatoren einen Arbeitsraum nicht gleichzeitig teilen sollen. Der Einfachheit halber wird im Folgenden von einem Arbeitsraum ausgegangen, der von zwei Manipulatoren nicht gleichzeitig (ungleichzeitig) geteilt wird, d.h. der Arbeitsraum darf zu einem gegebenen Zeitpunkt immer nur von einem der beiden Manipulatoren genutzt werden. Ein erster Manipulator befindet sich dabei zunächst außerhalb des Arbeitsraums, während ein zweiter Manipulator den Arbeitsraum zunächst verwendet bzw. sich in dem Arbeitsraum befindet und diesen somit belegt. Die beiden Manipulatoren weisen jeweils vorgegebene, definierte Bewegungsprofile (Bewegungsmuster bzw. Bewegungsabläufe) auf.

Gemäß dem Verfahren wird Echtzeitinformation über den Ist-Zustand des Bewegungsprofils des zweiten Manipulators bereitgestellt, während sich dieser in dem Arbeitsraum befindet. Diese Echtzeitinformation umfasst dabei vorzugsweise die Position und die Geschwindigkeit des zweiten Manipulators. Allerdings kann die Echtzeitinformation beispielsweise auch Daten über Kräfte und/oder Beschleunigung enthalten. Besonders vorteilhaft ist es, dass die Echtzeitinformation in Echtzeit, also taktsynchron, bereitgestellt wird.

In einem weiteren Schritt wird basierend auf der bereitgestellten Echtzeitinformation und dem vorgegebenen Bewegungsprofils des zweiten Manipulators die Restdauer bestimmt, die der zweite Manipulator benötigt, um den Arbeitsraum zu verlassen. In anderen Worten gibt die Restdauer die Zeitspanne an, während der der Arbeitsraum von dem zweiten Manipulator belegt bleibt. Diese Restdauer kann dabei vorzugsweise die Anzahl der Systemtakte enthalten, die der zweite Manipulator in dem Arbeitsraum verbleiben wird.

In einem folgenden Schritt wird das Bewegungsprofil des ersten Manipulators, welcher sich außerhalb des Arbeitsraums befindet, in Reaktion auf die bestimmte Restdauer angepasst. Dabei wird das Bewegungsprofil so angepasst, dass der erste Manipulator seine Bewegung in den Arbeitsraum derart anpasst, dass ein Anhalten des ersten Manipulators vor dem Arbeitsraum vermieden wird. Somit wird auf die verbleibende Verweildauer des zweiten Manipulators in dem Arbeitsraum reagiert, sodass der erste Manipulator frühestens nach Ablauf der Restdauer in den Arbeitsraum einfährt, und vorher nicht an der Grenze zu dem Arbeitsraum anhält und auf die Freigabe wartet. Damit wird eine taktzeitoptimierte Anpassung des Geschwindigkeitsprofils des ersten Manipulators ermöglicht. Durch solch ein Optimieren der Taktzeiten wird die Effizienz der Zusammenarbeit von mehreren Manipulatoren verbessert.

Generell bevorzugt umfasst das Anpassen des Bewegungsprofils des ersten Manipulators ein Reduzieren der Geschwindigkeit und/oder ein Fahren einer Bremsbahn oder ein Erhöhen der Geschwindigkeit. Vorzugsweise bewegt sich der erste Manipulator kontinuierlich ohne abrupt zu halten und abrupt zu beschleunigen und erreicht mit einer optimalen Geschwindigkeit den Arbeitsraum, wenn dieser freigegeben wird. Eine solche Anpassung des Bewegungsprofils des ersten Manipulators in Abhängigkeit von der verbleibenden Verweildauer des im Arbeitsraum befindlichen zweiten Manipulators ist energieeffizient und materialschonend, da ein Abbremsen und Beschleunigen an der Arbeitsraumgrenze vermieden wird. Das Fahren einer Bremsbahn bedeutet, dass der Manipulator einen Umweg fährt, um zu einem späteren Zeitpunkt am Arbeitsraum einzutreffen, als es nach dem ursprünglichen Bewegungsprofil geplant war. Beispielsweise fährt der Manipulator nicht in einer direkten Linie zum Arbeitsraum, sondern in einem Bogen. Auf diese Weise können unerwünschte Bremsvorgänge reduziert oder vermieden werden.

Vorzugsweise basiert das Anpassen des Bewegungsprofils auf dem vorgegebenen Bewegungsprofil des Manipulators und umfasst ein Durchführen mindestens eines weiteren Arbeitsschrittes außerhalb des belegten Arbeitsraums. Dies bedeutet, dass der Manipulator basierend auf seinem vorgegebenen Bewegungsprofil weiterarbeitet, in dem er z.B. bestimmte Arbeitsaufgaben oder Arbeitsabläufe ausführt, die in seinem Bewegungsprofil vorprogrammiert sind. So kann beispielsweise ein Arbeitsschritt, der gemäß dem vorgegebenen Bewegungsprofils zu einem späteren Zeitpunkt außerhalb des betreffenden Arbeitsraumes von dem ersten Manipulator durchgeführt werden soll, vorteilhaft vorgezogen werden. Dadurch wird ebenfalls verhindert, dass der erste Manipulator an der Arbeitsraumgrenze anhält und auf die Freigabe wartet.

Vorzugsweise erhöht der erste Manipulator seine Geschwindigkeit, wenn der zeitliche Abstand des ersten Manipulators zur Arbeitsraumgrenze größer ist als die bestimmte Restdauer. In anderen Worten, wenn der erste Manipulator aufgrund seiner aktuellen Bahnplanung eine längere Zeit braucht um den Arbeitsraum zu erreichen, als die Restdauer, die der zweite Manipulator noch benötigt, um den Arbeitsraum zu verlassen, erhöht der erste Manipulator seine Geschwindigkeit entsprechend um vorteilhaft die Zeit zu minimieren, die der Arbeitsraum nicht genutzt wird.

Weiterhin vorzugsweise reduziert der erste Manipulator seine Geschwindigkeit und/oder fährt eine Bremsbahn, wenn der zeitliche Abstand des ersten Manipulators zur Arbeitsraumgrenze kleiner ist als die bestimmte Restdauer. In anderen Worten, wenn der erste Manipulator aufgrund seiner aktuellen Bahnplanung eine kürzere Zeit braucht um den Arbeitsraum zu erreichen, als die Restdauer, die der zweite Manipulator noch benötigt, um den Arbeitsraum zu verlassen, reduziert der erste Manipulator seine Geschwindigkeit entsprechend und/oder fährt eine Bremsbahn (d.h. beispielsweise einen Umweg). Alternativ oder zusätzlich kann der erste Manipulator auch mindestens einen weiteren Arbeitsschritt außerhalb des belegten Arbeitsraums durchführen. Somit wird sichergestellt, dass der erste Manipulator in einer kontinuierlichen Bewegung in den Arbeitsraum einfährt, nachdem der zweite Manipulator diesen verlassen hat, ohne dass der erste Manipulator an der Arbeitsraumgrenze anhält. Durch eine derartige Anpassung des Geschwindigkeitsprofils wird, im Vergleich zu den Methoden, die aus dem Stand der Technik bekannt sind, eine optimale Auslastung der Manipulatoren erreicht und vorzugsweise außerdem ein geringerer Energieverbrauch erzielt, und die Materialermüdung verringert.

Vorzugsweise weisen der erste Manipulator und der zweite Manipulator jeweils eigenständige Steuerungen auf. Vorzugsweise stellt dabei der zweite Manipulator, welcher sich in dem Arbeitsraum befindet, die Echtzeitinformation und/oder die bestimmte Restdauer erst dann dem ersten Manipulator, welcher sich außerhalb des Arbeitsraums befindet, bereit, wenn mindestens eine zuvor definierte Bedingung erfüllt ist. Somit wird sichergestellt, dass der zweite Manipulator nicht fortwährend die Daten dem ersten Manipulator bereitstellt, sondern erst zu einem bestimmten Zeitpunkt. Dadurch wird das gesamte Datenvolumen, welches übertragen wird, deutlich reduziert. Da weniger Daten bereitgestellt werden, wird zudem der erste Manipulator entlastet, da dieser weniger Daten auswerten muss.

Vorzugsweise beinhaltet die vorher definierte Bedingung ein Unterschreiten einer vorher definierten Restdauer, die der zweite Manipulator benötigt, um den Arbeitsraum zu verlassen. Weiterhin vorzugsweise beinhaltet die vorher definierte Bedingung ein Unterschreiten einer vorher definierten räumlichen Distanz des zweiten Manipulators zur Arbeitsraumgrenze. Somit kann festgelegt werden, dass der zweite Manipulator erst die Echtzeitinformation und/oder die bestimmte Restdauer dem ersten Manipulator bereitstellt, wenn er eine bestimmte räumliche und/oder zeitliche Distanz zur Arbeitsraumgrenze erreicht hat.

Das erfindungsgemäße Manipulatorsystem, umfassend zwei Manipulatoren, insbesondere Industrieroboter, die einen Arbeitsraum nicht gleichzeitig teilen, ist mit einer Steuervorrichtung versehen, die zur Durchführung des erfindungsgemäßen Verfahrens eingerichtet ist, um die beschriebenen Verfahrensschritte ausführen zu können.

### 4. Ausführungsbeispiele

Im Folgenden wird die Erfindung unter Bezugnahme auf die beigefügten Figuren genauer erläutert. Hierbei zeigt:
Fig. 1 eine Roboterzelle mit zwei Robotern in rein schematischer Skizzierung;
Fig. 2 eine weitere Roboterzelle mit zwei Robotern; und
Fig. 3 ein Flussdiagramm, welches schematisch und beispielhaft den Ablauf des erfindungsgemäßen Verfahrens darlegt.

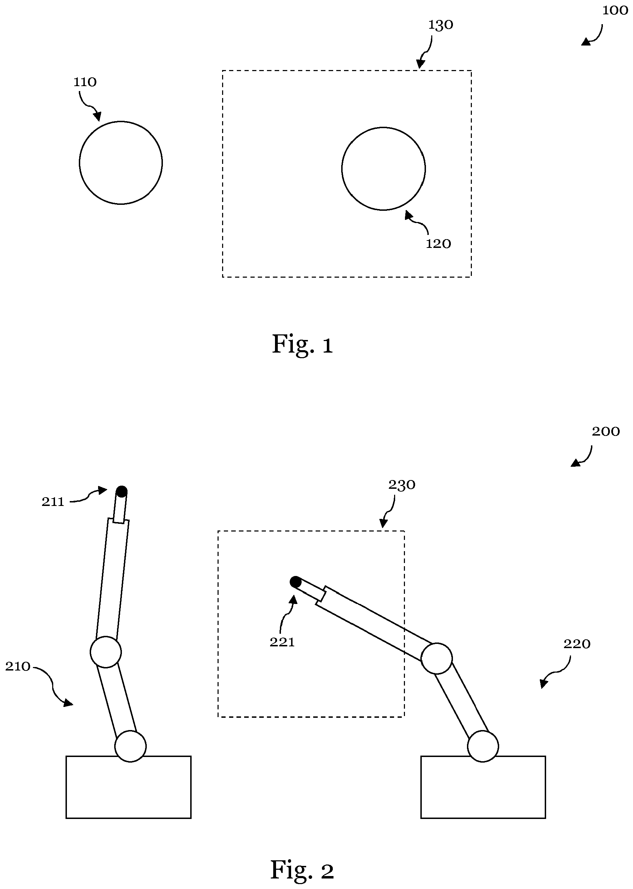

Die Fig. 1 zeigt eine Roboterzelle 100 mit zwei zusammenarbeitenden Manipulatoren, nämlich zwei Robotern 110, 120. Diese Roboter 110, 120 sind vorzugsweise Industrieroboter, welche beweglich sind und in Arbeitsräume eintreten und diese auch wieder verlassen können. Die Roboter 110, 120 werden mittels entsprechender Steuervorrichtungen gesteuert. Erfindungsgemäß können die Roboter 110, 120 jeweils eigenständige oder eine gemeinsame Steuerung aufweisen. Ebenfalls gekennzeichnet ist ein Arbeitsraum 130, welcher nicht gleichzeitig von beiden Robotern geteilt wird. In anderen Worten kann Roboter 110 den Arbeitsraum 130 erst nutzen, wenn Roboter 120 diesen verlassen hat. Wenn Roboter 110 den Arbeitsraum 130 betreten würde bevor Roboter 120 diesen verlassen hat, würde das Kollisionsrisiko steigen. Deshalb sollte, um mögliche Kollisionen zu verhindern, der Arbeitsraum 130 nur von maximal einem Roboter belegt sein. So kann Roboter 110 beispielsweise an der Grenze zum Arbeitsraum 130 prüfen, ob dieser frei ist. Ist dies der Fall, so kann der Roboter 110 in den Arbeitsbereich 130 einfahren. Wenn Roboter 120 allerdings in dem Arbeitsraum 130 ist, bzw. darin arbeitet, erhält Roboter 110 als Antwort auf seine Prüfung ein Signal, dass der Arbeitsraum 130 belegt ist. Folglich muss Roboter 110 warten, bis Roboter 120 den Bereich 130 verlassen hat und diesen somit freigibt.

Die Fig. 2 zeigt ebenfalls eine Roboterzelle 200, welche einen Arbeitsraum 230 aufweist, welcher von zwei Robotern 210, 220 nicht gleichzeitig genutzt wird. Die beiden Roboter 210, 220 sind ortsfest installiert, können aber mit ihren Roboterarmen in den Arbeitsraum 230 hineingreifen. Analog zu der oben beschriebenen Situation kann hier Roboter 210 seinen Werkzeugzentrumspunkt (TCP) 211 erst in den Arbeitsraum 230 fahren, wenn der TCP 221 des Roboters 220 aus diesem Arbeitsraum herausgefahren wurde. Dabei versteht der Fachmann, dass der Roboter 210 erst in den Arbeitsraum 230 hineinfährt, wenn Roboter 220 diesen komplett verlassen hat.

Die vorliegende Erfindung ermöglicht es dem Roboter 110, 210, welcher sich außerhalb des Arbeitsraums 130, 230 befindet und diesen nutzen möchte, auf den aktuellen Zustand des anderen Roboters 120, 220, welcher sich innerhalb des Arbeitsraums 130, 230 befindet, zu reagieren. Die Roboter 110, 120, 210, 220 weisen vorgegebene Bewegungsprofile auf, die ein vorausschauendes Kooperieren mehrerer Roboter ermöglichen. Durch das Bereitstellen von Echtzeitinformation bzw. Echtzeitinformationen, und der Bestimmung der Restdauer bis ein belegter Arbeitsraum freigegeben wird, kann der Arbeitsraum 130, 230 taktzeitoptimiert geteilt werden. So kann beispielsweise erreicht werden, dass der Roboter 110, 210 mit optimaler Geschwindigkeit den Arbeitsraum erreicht, sobald dieser freigegeben wird.

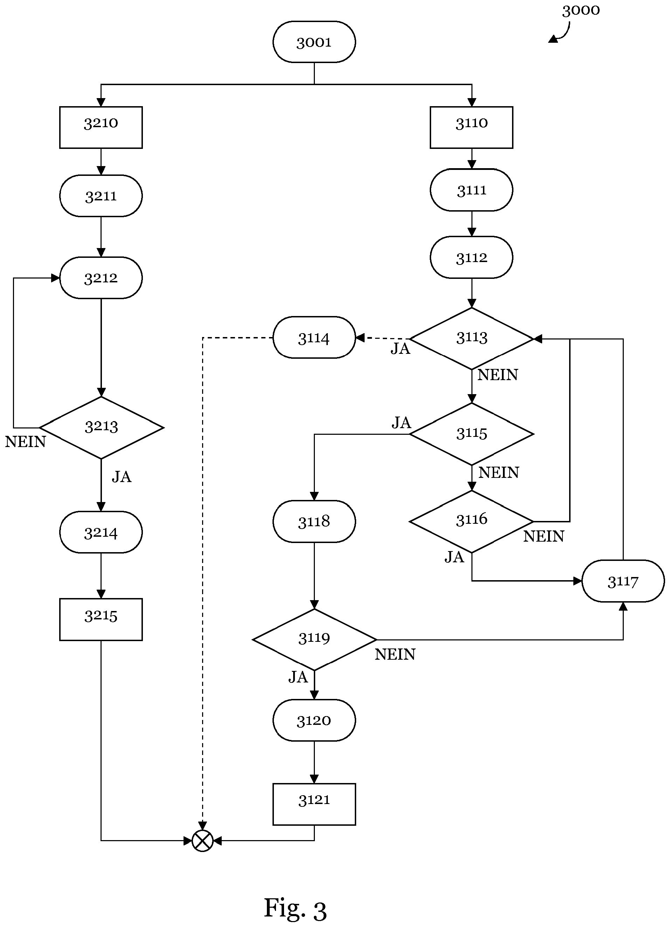

Die Fig. 3 zeigt ein Ablaufdiagramm zur Durchführung eines erfindungsgemäßen Verfahrens 3000. Das Verfahren beginnt im Schritt 3001. In diesem Schritt 3001 wird der Arbeitsraum, oder Arbeitsbereich, welcher nicht gleichzeitig von mehreren Robotern genutzt werden soll, definiert. Der Arbeitsraum kann dabei unterschiedliche Formen aufweisen, wie beispielsweise eine kartesische, zylindrische, oder kugelige Form.

Zu Beginn befindet sich ein erster Roboter im Schritt 3110 außerhalb des definierten Arbeitsbereiches, während sich ein zweiter Roboter im Schritt 3210 innerhalb des Arbeitsraums befindet. Somit ist die Ausgangsposition beispielhaft analog zu den in Fig. 1 oder Fig. 2 dargestellten Situationen, und auch für diese Situationen oder ähnliche anwendbar.

Ein Modul der Steuerung des zweiten Roboters kann im Schritt 3211 Bedingungen formulieren, wie beispielsweise ein Unterschreiten eines zeitlichen Abstandes des zweiten Roboters zum Erreichen der Arbeitsraumgrenze. Der Fachmann versteht, dass beliebig viele, logisch miteinander verknüpfte Bedingungen formuliert werden können. Im Schritt 3212 bewegt sich der zweite Roboter in Richtung der Arbeitsraumgrenze, um den Arbeitsraum zu verlassen.

Bei der Entscheidung 3213 wird festgestellt, ob die im Schritt 3211 formulierte Bedingung erfüllt ist. Wenn diese Bedingung erfüllt ist, wird im Schritt 3214 ein Ereignis in Echtzeit an den ersten Roboter übertragen. Dieses Ereignis kann beispielsweise Echtzeitinformationen über den Ist-Zustand des zweiten Roboters umfassen. Alternativ oder zusätzlich kann das Ereignis auch die Restdauer beinhalten, die der zweite Roboter noch den Arbeitsraum belegt. In diesem Fall bestimmt der zweite Roboter die Restdauer basierend auf den Echtzeitinformationen über den Ist-Zustand seines Bewegungsprofils. In Folge kann der zweite Roboter beispielsweise die Anzahl der Systemtakte, welche der zweite Roboter (laut Bahnplanung) noch im Arbeitsraum sein wird, an den ersten Roboter übertragen. Anschließend verlässt der zweite Roboter in Schritt 3215 den Arbeitsraum.

Der Fachmann versteht, dass die Echtzeitinformationen über den Ist-Zustand des Bewegungsprofils unterschiedliche Daten enthalten können. So können die Echtzeitinformationen beispielsweise die Position und Geschwindigkeit des Roboters, oder des TCP eines Roboters, umfassen. Alternativ können diese Echtzeitinformationen auch Daten über Kräfte, Drehmomente und/oder Beschleunigungen umfassen. Jedenfalls umfassen die Echtzeitinformationen solche Informationen, die es erlauben, in Kombination mit dem vorgegebenen Bewegungsprofil die Restdauer zu bestimmen, die ein Roboter benötigt, um einen Arbeitsraum zu verlassen.

Der erste Roboter, welcher sich zum Zeitpunkt 3110 außerhalb des Arbeitsraums befindet, registriert sich im Schritt 3111 auf Events vom zweiten Roboter. Somit kann vorteilhaft festgelegt werden, dass der erste Roboter Ereignisse vom zweiten Roboter erst ab dem Zeitpunkt dieser Registrierung empfangen soll.

Im Schritt 3112 nähert sich der erste Roboter dem Arbeitsraum. Bei der Entscheidung 3113 wird geprüft, ob der erste Roboter bereits die Arbeitsraumgrenze erreicht hat. Falls dies der Fall ist und keine Freigabe für den Arbeitsraum vorliegt, hält der erste Roboter bei Schritt 3114 an und wartet bis der zweite Roboter sich außerhalb des Arbeitsraums befindet, und dieser somit freigegeben ist. Dies ist eine Sicherheitsmaßnahme und sollte im Normalfall nicht auftreten, da ein Anhalten des ersten Roboter im Normalfall erfindungsgemäß verhindert wird. Dies wird im Diagramm durch die gestrichelte Linie angedeutet.

Falls der erste Roboter noch nicht die Arbeitsraumgrenze erreicht hat, wird im Schritt 3115 überprüft, ob ein Ereignis (Event) von dem zweiten Roboter empfangen wurde. Falls kein Ereignis von dem zweiten Roboter empfangen wurde, wird im Schritt 3116 überprüft, ob der erste Roboter das letzte Kommando zum Einfahren bzw. Anfahren des Arbeitsraumes ausführt. Wenn dies der Fall ist, und noch kein Ereignis vom zweiten Roboter vorliegt, wird im Schritt 3117 eine Verzögerungsstrategie auf den ersten Roboter angewendet. Eine Verzögerungsstrategie kann dabei eine oder mehrere der folgenden Aktionen beinhalten: Anhalten, Weiterfahren mit reduzierter Geschwindigkeit, Fahren einer Bremsbahn, oder Durchführen mindestens eines weiteren Arbeitsschrittes außerhalb des Arbeitsraums.

Wenn hingegen im Schritt 3115 festgestellt wurde, dass ein Event vom zweiten Roboter empfangen wurde, werden die vom zweiten Roboter bereitgestellten Daten im Schritt 3118 ausgewertet. Wenn beispielsweise Echtzeitinformationen über den Ist-Zustand des zweiten Roboters bereitgestellt wurden, kann basierend auf diesen Informationen und dem vorgegebenen Bewegungsprofils des zweiten Roboters die Restdauer bestimmt werden, die der zweite Roboter noch den Arbeitsraum belegt. Alternativ kann auch die Restdauer vom zweiten Roboter bestimmt und an den ersten Roboter übertragen worden sein.

Im Schritt 3119 wird festgestellt, ob eine oder mehrere vorher definierte Bedingungen erfüllt sind. Eine solche Bedingung könnte beispielsweise beinhalten, dass der zeitliche Abstand des zweiten Roboters zur Arbeitsraumgrenze, bzw. die Restdauer, die der zweite Roboter benötigt, um den Arbeitsraum zu verlassen, kürzer ist als der zeitliche Abstand des ersten Roboters zur Arbeitsraumgrenze. Wenn dies nicht der Fall ist, wird im Schritt 3117 eine Verzögerungsstrategie, wie oben beschrieben, auf den ersten Roboter angewendet. Somit wird ermöglicht, dass der erste Roboter nicht zu früh die Arbeitsraumgrenze erreicht und an dieser anhalten und warten muss.

Andernfalls, wenn im Schritt 3119 festgestellt wurde, dass die Restdauer des zweiten Roboters kürzer ist als der zeitliche Abstand des ersten Roboters zur Arbeitsraumgrenze, wird im Schritt 3120 die Geschwindigkeit des ersten Roboters beibehalten oder vorzugsweise erhöht. Somit wird erreicht, dass der erste Roboter vorteilhaft die Arbeitsraumgrenze genau zum Zeitpunkt der Arbeitsraumfreigabe erreicht. Alternativ kann der erste Roboter auch kurz nach Freigabe des Arbeitsraums die Arbeitsraumgrenze erreichen. Somit wird die Zeitspanne, die der Arbeitsraum ungenutzt bzw. freigegeben ist, minimiert. Schlussendlich betritt der erste Roboter im Schritt 3121 den freien Arbeitsraum.

Der Fachmann versteht, dass nicht alle Schritte des Verfahrens 3000 durchgeführt werden müssen, um ein taktzeitoptimiertes Teilen eines Arbeitsraumes im Sinne der vorliegenden Erfindung zu ermöglichen. Alternativ können auch ein oder mehrere Schritte hinzugefügt werden. So kann das Verfahren beispielsweise weiterhin enthalten, dass der erste Roboter an der Arbeitsraumgrenze bremst und auf Freigabe des Arbeitsraums wartet, wenn sich der zweite Roboter in dem Arbeitsraum außerplanmäßig verhält. Als eine weitere Variante kann der zweite Roboter ein zusätzliches Ereignis an den ersten Roboter senden, wenn der zweite Roboter definitiv den Arbeitsraum verlassen hat. Weiterhin kann das Verfahren 3000 auch dahingegen erweitert werden, dass mehrere als zwei Roboter den Arbeitsraum nicht gleichzeitig und taktzeitoptimiert teilen können.

### Bezugszeichenliste:

- 110, 120, 210, 220: Roboter
- 130, 230: Arbeitsräume

## Patentansprüche

1. Verfahren zum Steuern eines ersten Manipulators (110; 210), insbesondere eines ersten Roboters, der einen Arbeitsraum (130; 230) nicht gleichzeitig mit zumindest einem zweiten Manipulator (120; 220) insbesondere eines zweiten Roboters, teilt, wobei die beiden Manipulatoren jeweils vorgegebene Bewegungsprofile aufweisen, aufweisend folgende Verfahrensschritte:
a) Bereitstellen von Echtzeitinformation über den Ist-Zustand des Bewegungsprofils des zweiten Manipulators (120; 220), während dieser im Arbeitsraum (130; 230) ist;
b) Bestimmen, basierend auf der bereitgestellten Echtzeitinformation und dem vorgegebenen Bewegungsprofil des zweiten Manipulators (120; 220), der Restdauer, die der zweite Manipulator (120; 220) benötigt um den Arbeitsraum (130; 230) zu verlassen;
c) Anpassen des Bewegungsprofils des ersten Manipulators (110; 210) als Reaktion auf die in Schritt b) bestimmte Restdauer, sodass der erste Manipulator (110; 210) seine Bewegung an die Grenze des Arbeitsraums (130; 230) derart anpasst, dass ein Anhalten des ersten Manipulators (110; 210) vor dem Arbeitsraum (130; 230) vermieden wird, und sodass der erste Manipulator (110; 210) frühestens nach Ablauf der Restdauer in den Arbeitsraum einfährt und vorher nicht an der Grenze zu dem Arbeitsraum anhält und auf eine Freigabe des Arbeitsraumes wartet.

2. Verfahren nach Anspruch 1, wobei die Echtzeitinformation Position, und/oder Geschwindigkeit und/oder Kräfte und/oder Momente umfasst.

3. Verfahren nach einem der vorstehenden Ansprüche, wobei das Anpassen des Bewegungsprofils des ersten Manipulators (110; 210) ein Reduzieren der Geschwindigkeit des ersten Manipulators (110; 210) oder ein Fahren einer Bremsbahn oder ein Erhöhen der Geschwindigkeit des ersten Manipulators (110; 210) umfasst.

4. Verfahren nach einem der vorstehenden Ansprüche, wobei das Anpassen des Bewegungsprofils auf dem vorgegebenen Bewegungsprofil basiert und ein Durchführen eines Arbeitsschrittes außerhalb des Arbeitsraums (130; 230) umfasst.

5. Verfahren nach einem der vorstehenden Ansprüche, wobei der erste Manipulator (110; 210) seine Geschwindigkeit erhöht, wenn der zeitliche Abstand des ersten Manipulators (110; 210) zur Arbeitsraumgrenze größer ist als die bestimmte Restdauer.

6. Verfahren nach einem der vorstehenden Ansprüche, wobei der erste Manipulator (110; 210) seine Geschwindigkeit reduziert und/oder eine Bremsbahn fährt, wenn der zeitliche Abstand des ersten Manipulators (110; 210) zur Arbeitsraumgrenze kleiner ist als die bestimmte Restdauer.

7. Verfahren nach einem der vorstehenden Ansprüche, wobei der erste Manipulator (110; 210) und der zweite Manipulator (120; 220) jeweils eigenständige Steuerungen aufweisen und der zweite Manipulator (120; 220) die Echtzeitinformation und/oder die bestimmte Restdauer erst dann dem ersten Manipulator (110; 210) bereitstellt, wenn mindestens eine vorher definierte Bedingung erfüllt ist.

8. Verfahren nach Anspruch 7, wobei die vorher definierte Bedingung ein Unterschreiten einer vorher definierten Restdauer beinhaltet, die der zweite Manipulator (120; 220) benötigt um den Arbeitsraum (130; 230) zu verlassen, und/oder ein Unterschreiten einer vorher definierten räumlichen Distanz des zweiten Manipulators (120; 220) zur Arbeitsraumgrenze beinhaltet.

9. Verfahren nach einem der vorstehenden Ansprüche, wobei die Restdauer die Anzahl der Systemtakte enthält, die der zweite Manipulator (120; 220) in dem Arbeitsraum (130; 230) verbleiben wird.

10. Manipulatorsystem, umfassend zwei Manipulatoren (110; 120; 210; 220), insbesondere Roboter, die einen Arbeitsraum (130; 230) nicht gleichzeitig teilen, und wobei das System mit einer Steuervorrichtung versehen ist, die zur Durchführung eines Verfahrens nach einem der Ansprüche 1 - 9 eingerichtet ist.

## Claims

1. Method for controlling a first manipulator (110; 210), in particular a first robot, which does not simultaneously share a working space (130; 230) with at least one second manipulator (120; 220), in particular a second robot, wherein the two manipulators each have predefined movement profiles, comprising the following method steps:
a) providing real-time information about the actual state of the movement profile of the second manipulator (120; 220) while it is in the working space (130; 230);
b) determining, on the basis of the real-time information provided and the predefined movement profile of the second manipulator (120; 220), the remaining duration which the second manipulator (120; 220) requires in order to leave the working space (130; 230);
c) adapting the movement profile of the first manipulator (110; 210) in response to the remaining duration determined in step b), with the result that the first manipulator (110; 210) adapts its movement to the boundary of the working space (130; 230) in such a way that a stopping of the first manipulator (110; 210) in front of the working space (130; 230) is avoided, and with the result that the first manipulator (110; 210) enters the working space at the earliest after the remaining duration has elapsed and does not stop at the boundary with respect to the working space beforehand and waits for a release of the working space.

2. Method according to Claim 1, wherein the real-time information comprises position and/or speed and/or forces and/or moments.

3. Method according to one of the preceding claims, wherein the adaptation of the movement profile of the first manipulator (110; 210) comprises reducing the speed of the first manipulator (110; 210) or driving a braking path or increasing the speed of the first manipulator (110; 210).

4. Method according to one of the preceding claims, wherein the adaptation of the movement profile is based on the predefined movement profile and comprises carrying out a work step outside the working space (130; 230).

5. Method according to one of the preceding claims, wherein the first manipulator (110; 210) increases its speed if the time interval of the first manipulator (110; 210) from the working space boundary is greater than the determined remaining duration.

6. Method according to one of the preceding claims, wherein the first manipulator (110; 210) reduces its speed and/or drives a braking path if the time interval of the first manipulator (110; 210) from the working space boundary is less than the determined remaining duration.

7. Method according to one of the preceding claims, wherein the first manipulator (110; 210) and the second manipulator (120; 220) each have independent controllers and the second manipulator (120; 220) provides the real-time information and/or the determined remaining duration to the first manipulator (110; 210) only if at least one predefined condition is met.

8. Method according to Claim 7, wherein the predefined condition comprises falling below a predefined remaining duration which the second manipulator (120; 220) requires in order to leave the working space (130; 230) and/or comprises falling below a predefined spatial distance of the second manipulator (120; 220) from the working space boundary.

9. Method according to one of the preceding claims, wherein the remaining duration contains the number of system cycles which the second manipulator (120; 220) will remain in the working space (130; 230).

10. Manipulator system, comprising two manipulators (110; 120; 210; 220), in particular robots, which do not simultaneously share a working space (130; 230), and wherein the system is provided with a control device which is configured to carry out a method according to one of claims 1-9.

## Revendications

1. Procédé pour commander un premier manipulateur (110 ; 210), en particulier d'un premier robot, qui partage une aire de travail (130 ; 230) de manière non simultanée avec au moins un deuxième manipulateur (120 ; 220), en particulier d'un deuxième robot, dans lequel les deux manipulateurs présentent respectivement des profils de mouvement spécifiés, comprenant les étapes de procédé suivantes :
a) la fourniture d'une information en temps réel sur l'état réel du profil de mouvement du deuxième manipulateur (120 ; 220), pendant que celui-ci est dans l'aire de travail (130 ; 230) ;
b) la détermination, sur la base de l'information en temps réel fournie et du profil de mouvement spécifié du deuxième manipulateur (120 ; 220), de la durée restante qui est nécessaire au deuxième manipulateur (120 ; 220) pour quitter l'aire de travail (130 ; 230) ;
c) l'adaptation du profil de mouvement du premier manipulateur (110 ; 210) en réponse à la durée restante déterminée à l'étape b), de sorte que le premier manipulateur (110 ; 210) adapte son mouvement à la limite de l'aire de travail (130 ; 230), de telle sorte qu'un arrêt du premier manipulateur (110 ; 210) devant l'aire de travail (130 ; 230) soit évité, et de sorte que le premier manipulateur (110 ; 210) entre dans l'aire de travail au plus tôt après expiration de la durée restante et, avant, ne s'arrête pas à la limite de l'aire de travail et attende une libération de l'aire de travail.

2. Procédé selon la revendication 1, dans lequel l'information en temps réel comprend une position, et/ou une vitesse et/ou des forces et/ou des moments.

3. Procédé selon l'une des revendications précédentes, dans lequel l'adaptation du profil de mouvement du premier manipulateur (110 ; 210) comprend une réduction de la vitesse du premier manipulateur (110 ; 210), ou une conduite sur une voie de freinage, ou une augmentation de la vitesse du premier manipulateur (110 ; 210).

4. Procédé selon l'une des revendications précédentes, dans lequel l'adaptation du profil de mouvement se base sur le profil de mouvement spécifié et comprend une mise en œuvre d'une étape de travail à l'extérieur de l'aire de travail (130 ; 230).

5. Procédé selon l'une des revendications précédentes, dans lequel le premier manipulateur (110 ; 210) augmente sa vitesse lorsque l'écart temporel du premier manipulateur (110 ; 210) par rapport à la limite d'aire de travail est supérieur à la durée restante déterminée.

6. Procédé selon l'une des revendications précédentes, dans lequel le premier manipulateur (110 ; 210) réduit sa vitesse et/ou circule sur une voie de freinage lorsque l'écart temporel du premier manipulateur (110 ; 210) par rapport à la limite d'aire de travail est inférieur à la durée restante déterminée.

7. Procédé selon l'une des revendications précédentes, dans lequel le premier manipulateur (110 ; 210) et le deuxième manipulateur (120 ; 220) possèdent respectivement des commandes autonomes, et le deuxième manipulateur (120 ; 220) ne fournit l'information en temps réel et/ou la durée restante déterminée au premier manipulateur (110 ; 210) que lorsqu'au moins une condition prédéfinie est satisfaite.

8. Procédé selon la revendication 7, dans lequel la condition prédéfinie comporte un temps inférieur à une durée restante prédéfinie qui est nécessaire au deuxième manipulateur (120 ; 220) pour quitter l'aire de travail (130 ; 230), et/ou comporte une distance inférieure à une distance spatiale prédéfinie du deuxième manipulateur (120 ; 220) par rapport à la limite d'aire de travail.

9. Procédé selon l'une des revendications précédentes, dans lequel la durée restante contient le nombre de cycles de système pendant lesquels le deuxième manipulateur (120 ; 220) restera dans l'aire de travail (130 ; 230).

10. Système de manipulateur, comprenant deux manipulateurs (110 ; 120 ; 210 ; 220), en particulier de robots, qui partagent une aire de travail (130 ; 230) de manière non simultanée, et dans lequel le système est pourvu d'un dispositif de commande qui est conçu pour mettre en œuvre un procédé selon l'une des revendications 1 à 9.
